# EUROPEAN PATENT APPLICATION

(11) **EP 1 870 441 A1**
(43) Date of publication of application: **26.12.2007**
(21) Application number: 06729281.3
(22) Date of filing: 16.03.2006
(51) Int. Cl.: C09D 11/02, C09C 1/48, C09C 3/10

(54) **PROCESS FOR PRODUCING INK COMPOSITION FOR OFFSET PRINTING, AND INK COMPOSITION FOR OFFSET PRINTING PRODUCED BY SAID PRODUCTION PROCESS**

(30) Priority: 25.03.2005 JP 2005089957
(71) Applicant: SAKATA INX CORPORATION, Osaka-shi, Osaka 550-0002 (JP)
(72) Inventor: ARAKI, Takashi, i-ku, Osaka-shi, Osaka, 5500002 (JP); KATAURA, Yuichi, i-ku, Osaka-shi, Osaka, 5500002 (JP); FUNAHASHI, Hiroaki, i-ku, Osaka-shi, Osaka, 5500002 (JP)
(74) Representative: Hart Davis, Jason
(86) International application number: PCT/JP2006/305288
(87) International publication number: WO 2006/103950

(57) **Abstract**

The present invention aims to provide a method of producing an ink composition for offset printing, which can improve the productivity of inks considerably, and in which the printing quality of printed substances obtained in using the foregoing ink composition for offset printing for sheet-fed printing is equal to or higher than that of printed substances obtained with the acid powder carbon black, while using the acid carbon black, particularly an acid bead carbon black. The present invention pertains to a method of producing an ink composition for offset printing, including the steps of wetting 100 parts by mass of an acid carbon black having a pH value of 2.0 to 6.0 with 25 to 400 parts by mass of a wetting agent containing at least water, using an oil-based varnish for a printing ink containing an alkyd resin having an acid value of 30 KOH mg/g or less to perform flushing of the wetted acid bead carbon black, and then removing the wetting agent.

## Description

### TECHNICAL FIELD

The present invention relates to a method of producing an ink composition for offset printing and the ink composition for offset printing obtained by the method.

### BACKGROUND ART

In order to produce a black ink composition for offset printing, it is necessary to enhance the fluidity and the color developing effect of a carbon black by adequately dispersing the carbon black in an oil-based varnish for a printing ink.

Generally, a carbon black used in the black ink composition for offset printing used for sheet-fed printing is an acid carbon black, the surface of which is oxidation treated with ozone or chemicals (for example, refer to Patent Document 1).

In the black ink composition for offset printing to be obtained by using this acid carbon black, a carbon black has excellent age stability, and particularly the printed substances obtained by performing sheet-fed printing with this ink composition have good printing quality such as gloss and a jet-black property.

However, in recent years, further improvement in printing quality of the black ink composition for offset printing to be obtained by using an acid carbon black and improved productivity and a more efficient production process in using the acid carbon black to produce the black ink composition for offset printing are required.

The acid carbon black includes an acid powder carbon black and an acid bead carbon black, which are different in their shapes from each other. The acid powder carbon black of these acid carbon blacks has high dispersion, but it has a problem that dust particles are produced to deteriorate a working environment since it is powdery. Therefore, use of the acid bead carbon black in bead form formed by granulating the powder carbon is being investigated recently for the purpose of improving from these problems. However, while improvement in the problem of working environment can be achieved by use of the acid bead carbon black, dispersion of the carbon black becomes difficult. Among others, an acid bead carbon black of a type, in which a carbon black is spontaneously oxidized without a particular treatment in the production stage and therefore its surface is acid, is low priced, but the dispersion of the carbon black becomes more difficult.

Accordingly, there are many advantages if the acid (especially, spontaneously oxidized) bead carbon black can be utilized in a field of an ink, but when the acid bead carbon black is dispersed by a conventional dispersion method, it had a problem that the productivity decreases considerably since the carbon black is settled during mixing with an oil-based varnish for a printing ink and therefore the acid bead carbon black cannot be adequately dispersed.

Patent Document 1: Japanese Kokai Publication No. Hei-10-025441

### SUMMARY OF THE INVENTION

As described above, even when an acid carbon black is to be used, a conventional production method may require extra facilities and production cost and cannot take advantage of the acid carbon black.

Accordingly, it is an object of the present invention to provide a method of producing an ink composition for offset printing, which can improve the productivity of inks considerably while using the acid carbon black, particularly an acid bead carbon black. Further, it is another object of the present invention to provide an ink composition for offset printing in which the printing quality of printed substances obtained in using the foregoing ink composition for offset printing for sheet-fed printing is equal to or higher than that of printed substances obtained by milling the acid powder carbon black in a conventional manner, that is, milling the acid powder carbon black in a dry condition in an oil-based varnish for a printing ink.

In order to solve the above-mentioned problems, the present inventors made earnest investigations, and consequently they have found that all of the problems can be solved by wetting the acid carbon black, particularly the acid bead carbon black, with a wetting agent containing at least water, and then using an oil-based varnish for a printing ink containing an alkyd resin having an acid value of 30 KOH mg/g or less to perform flushing. These findings have now led to completion of the present invention.

That is, the present invention pertains to (1) a method of producing an ink composition for offset printing, including the steps of
wetting 100 parts by mass of an acid carbon black having a pH value of 2.0 to 6.0 with 25 to 400 parts by mass of a wetting agent containing at least water,
using an oil-based varnish for a printing ink containing an alkyd resin having an acid value of 30 KOH mg/g or less to perform flushing of the wetted acid bead carbon black, and then
removing the wetting agent.

In addition, the present invention pertains to (2) the method of producing an ink composition for offset printing as described in (1), further including the step of
milling with a roll mill or a bead mill after completion of the steps of wetting, performing flushing and then removing the wetting agent.

In addition, the present invention pertains to (3) method of producing an ink composition for offset printing as described in (1) or (2),
wherein an acid carbon black having a bulk density of 0.1 to 0.8 g/cm³ and an average primary particle diameter of 15 to 70 nm is used as the acid carbon black.

In addition, the present invention pertains to (4) the method of producing an ink composition for offset printing as described in any one of (1) to (3),
wherein the acid carbon black is an acid bead carbon black having a bulk density of 0.2 to 0.8 g/cm³ and an average primary particle diameter of 15 to 70 nm.

In addition, the present invention pertains to (5) the method of producing an ink composition for offset printing as described in any one of (1) to (4),
wherein a vegetable oil modified alkyd resin is used as the alkyd resin.

In addition, the present invention pertains to (6) the method of producing an ink composition for offset printing as described in any one of (1) to (5),
wherein the content of the alkyd resin is 1 to 60% by mass with respect to the acid carbon black.

Further, the present invention pertains to (7) an ink composition for offset printing prepared by the method of producing an ink composition for offset printing as described in any one of (1) to (6).

Further, the present invention pertains to (8) the ink composition for offset printing as described in (7),
wherein the ink composition for offset printing is an ink composition for sheet-fed offset printing.

### DETAILED DESCRIPTION OF THE INVENTION

Hereinafter, the present invention will be described in more detail.

### <Constituent materials used in the method of producing an ink composition for offset printing of the present invention>

Constituent materials used in the method of producing an ink composition for offset printing of the present invention will be described.
First, the carbon black is not particularly limited as long as it is an acid carbon black having a pH value of 2.0 to 6.0, but the production method of the present invention is effective for a acid carbon black having a bulk density of 0.1 to 0.8 g/cm³ and an average primary particle diameter of 15 to 70 nm, and in particular, more effective for a acid bead carbon black having a bulk density of 0.2 to 0.8 g/cm³ and an average primary particle diameter of 15 to 70 nm in view of the objects of the present invention.

The bulk density was measured according to JIS K 6219.

The average primary particle diameter is an arithmetic mean value of particle diameters determined by the observation of particles through an electron microscope.

Incidentally, the "bead carbon black" refers to a carbon black in the form of bead prepared by granulating the powder carbon black.

As an acid carbon black, the carbon black, the surface of which is oxidation treated with ozone or chemicals, can be employed, but if a carbon black is acid, the carbon black not subjected to such a particular oxidation treatment may be employed. That is, an acid carbon black of a type, in which a carbon black is spontaneously oxidized and therefore its surface is acid as described above, may be employed. There are a variety of methods of producing the acid bead carbon black, and examples thereof include an acid bead carbon black prepared by a furnace method which is currently a common production method, and a pseudo-channel acid bead carbon black by a Degussa gas black process developed by Degussa AG.

Next, in the present invention, in order to wet the acid carbon black, a wetting agent containing at least water is used. As the wetting agent, water can be used and a solvent compatible with water which can be used in combination with water can be used as required, but it is preferred to reduce an amount of the solvent compatible with water as far as possible from the viewpoint of environment and the wettability of the acid carbon black. Specifically, the wetting agent preferably contains water in an amount of 50% by mass or more of the total amount of the wetting agent, and it is particularly preferred that the wetting agent contains only water. When the amount of water is less than 50% by mass, wettability tends to decrease. In addition, kinds of water to be used is not particularly limited, and for example, running water, ion-exchange water, distilled water can be used, but it is preferred to use ion-exchange water in that the content of water-soluble ionic substances having negative effects on printing is small.

The solvent compatible with water is not particularly limited, and examples of the solvent include ethanol, ethylene glycol and the like.

An amount of the wetting agent with which the acid carbon black is wetted is 25 to 400 parts by mass with respect to 100 parts by mass of the acid carbon black, and is preferably 40 to 250 parts by mass in consideration of quality of a paper face and ease of removal of the wetting agent containing water. When the amount of the wetting agent is less than 25 parts by mass, good dispersibility cannot be attained and there is a problem of deteriorating workability due to flying of the acid carbon black. On the other hand, when the amount of the wetting agent is more than 400 parts by mass, there are problems that the productivity is decreased since the time required to remove the wetting agent becomes longer and an extra treatment is needed since an amount of the wetting agent to be removed increases.

Next, as the alkyd resin which is a component of the oil-based varnish for a printing ink, an alkyd resin having an acid value of 30 KOH mg/g or less is used. An alkyd resin having an acid value of 10 KOH mg/g or less can be preferably used. The species of alkyd resin is not particularly limited, but it is preferably a vegetable oil modified alkyd resin. As the vegetable oil modified alkyd resin, specifically, a soybean oil modified alkyd resin, a linseed oil modified alkyd resin, and a tung oil modified alkyd resin can be exemplified. Among vegetable oil modified alkyd resins, a vegetable oil modified alkyd resin having a basic skeleton consisting of isophthalic acid is preferred. In addition, in the ink for sheet-fed printing to form an ink coat by oxidative polymerization, an alkyd resin modified with a semi-drying oil or a drying oil is preferred.

An amount of the alkyd resin to be used is preferably in a range of 1 to 60% by mass with respect to 100% by mass of the acid carbon black. When this amount is less than 1% by mass with respect to the acid carbon black, the dispersibility is not adequate, and on the other hand, when this amount is more than 60% by mass, excessive emulsification of dampening water to the resulting ink composition for offset printing occurs and this tends to have a detrimental effect on printing suitability. However, since an adequate amount of the alkyd resin to be used varies with the species of the alkyd resin, the species of the acid carbon black, or the species or use amount of other materials used in combination, it is preferred to select an adequate amount of the alkyd resin to be used within the above-mentioned range.

Here, an acid value was measured according to JIS K 5601-2-1.

As an oil-based varnish for a printing ink used for the production method of the present invention, a binder resin and an oily liquid are used in combination with the alkyd resin.

As the above-mentioned binder resin, rosin modified phenolic resins, rosin modified maleic resins, and polyester resins not containing phenol, used in inks for offset printing, can be used without particular limitation. In addition, petroleum resins can be used together as required.

It is proper that the total amount of the alkyd resin and the binder resin to be used in the ink composition for offset printing is generally in a range of 20 to 60% by mass.

An amount of the oily liquid is not particularly limited, but it is preferred that the oily liquid is used so as to be 20 to 70% by mass with respect to the whole oil-based varnish for a printing ink.

As the oily liquid, vegetable oil components and mineral oil components can be used.
Examples of the vegetable oil components include vegetable oils and fatty acid ester compounds derived from a vegetable oil.
As the vegetable oil, drying oils or semi-drying oils suitable for offset printing such as a soybean oil, a cotton seed oil, a linseed oil, a safflower oil, a tung oil, a tall oil, a dehydrated caster oil and a canola oil can be exemplified. These oils may be used singly or in combination of two or more species.

Examples of the fatty acid ester compounds derived from a vegetable oil include monoalkyl ester compounds of fatty acids derived from the drying oils or semi-drying oils. As a fatty acid composing such fatty acid monoester, a saturated or unsaturated fatty acid having 16 to 20 carbon atoms is preferred, and stearic acid, isostearic acid, hydroxystearic acid, oleic acid, linoleic acid, linolenic acid, eleostearic acid and the like can be exemplified. Alkyl groups derived from an alcohol, which composes the fatty acid monoester, are preferably groups having 1 to 10 carbon atoms, and alkyl groups of methyl, ethyl, propyl, isopropyl, butyl, isobutyl, t-butyl, 2-ethylhexyl or the like can be exemplified. These fatty acid monoesters can be used alone or in combination of two or more species.

Examples of the mineral oil components include substances which are not compatible with water, and have a boiling point of 160°C or higher, preferably a boiling point of 200°C or higher. Specifically, n-paraffinic solvents, isoparaffinic solvents, naphthenic solvents, aromatic solvents, α-olefinic petroleum solvents, light gas oil, spindle oil, machine oil, cylinder oil, turpentine oil, mineral spirits and the like can be exemplified.

In addition, in the oil-based varnish for a printing ink, as for vegetable oil components and mineral oil components, a vegetable oil component may be used singly, and a fatty acid ester or a mineral oil may be used singly, and the vegetable oil component may be used in conjunction with the mineral oil component.

Furthermore, additives such as a gelling agent, a drier, a drying-retarder, an antioxidant, an anti scumming aid, a friction resistance improver, an antioffset agent and a nonionic surfactant, and the like can be appropriately used as required.

### <Method of producing an ink composition for offset printing of the present invention>

Next, the method of producing an ink composition for offset printing of the present invention will be described.
The present invention pertains to a method of producing an ink composition for offset printing, including the steps of wetting 100 parts by mass of an acid carbon black having a pH value of 2.0 to 6.0 with 25 to 400 parts by mass of a wetting agent containing at least water, using an oil-based varnish for a printing ink containing an alkyd resin having an acid value of 30 KOH mg/g or less to perform flushing of the foregoing wetted acid carbon black, and then removing the wetting agent.

In the method of producing an ink composition for offset printing of the present invention, an apparatus to wet the acid carbon black is not particularly limited, but either a disper or a flusher (kneader) is preferably used.

In the method of producing an ink composition for offset printing of the present invention, "flushing" refers to a step of mixing/stirring a acid carbon black wetted with a wetting agent containing at least water and an oil-based varnish to convert the acid carbon black from a water phase to an oily phase. An apparatus used in flushing is not particularly limited, and for example, a flusher or a stirring apparatus having a mechanism capable of removing the wetting agent can be used.

In the method of producing an ink composition for offset printing of the present invention, performing flushing, and the wetting agent is removed until the content of the wetting agent containing water in the flushed composition becomes preferably 2% by mass or less. Further, in the production method of the present invention, it is preferred to undergo the step of milling after the steps of wetting, performing flushing and then removing the wetting agent. An apparatus for milling is not particularly limited, and for example, a roll mill or a bead mill can be used. In this step, the carbon black is milled until a particle diameter of the ink composition for offset printing becomes, for example, 5 µm or less which is smaller than a printed film thickness. This particle diameter can be measured with, for example, a grind gauge.

In the present invention, an "oil-based varnish for a printing ink containing an alkyd resin having an acid value of 30 KOH mg/g or less" used at the time of flushing may become a state in which an oil-based varnish for a printing ink contains an alkyd resin having an acid value of 30 KOH mg/g or less in a predetermined amount as a result at the time of flushing. Therefore, methods of adding the respective components at the time of preparing is not particularly limited, and the ink composition may be prepared by any method.

That is, the oil-based varnish for a printing ink may be prepared by dissolving the binder resin and the alkyd resin in a vegetable oil component and/or a mineral oil component in advance before performing flushing so that the content of the alkyd resin becomes a predetermined amount. Alternatively, for example, when the alkyd resin is liquid, in performing flushing, the oil-based varnish for a printing ink may be prepared in such a way that the content of the alkyd resin becomes a predetermined amount ultimately by a method in which the alkyd resin and a binder resin oil-based varnish formed by dissolving the binder resin in a vegetable oil component and/or a mineral oil component are separately added.

A method of producing an ink composition for offset printing using the oil-based varnish for a printing ink prepared by dissolving the binder resin and the alkyd resin in a vegetable oil component and/or a mineral oil component in advance is not particularly limited, and example of this method include a method including the steps of putting/stirring the acid carbon black and the wetting agent containing at least water in a disper or a flusher (kneader) to wet the acid carbon black, then adding the oil-based varnish for a printing ink to the wetted substance of the acid carbon black, flushing the resulting mixture with the flusher (kneader) or a stirring apparatus having a mechanism capable of removing the wetting agent, and removing the wetting agent until the content of the wetting agent in the composition obtained by flushing becomes preferably 2% by mass or less. Further, there is a method in which after the above-mentioned method, the ink composition for offset printing is obtained by adding the oil-based varnish for a printing ink or the binder resin oil-based varnished as required, undergoing the step of milling/dispersing with a bead mill or a three-roll mill, and adjusting the obtained milled mixture to a prescribed viscosity by adding a residual material.

In addition, examples of a method in which the liquid alkyd resin and the binder resin oil-based varnish are separately added at the time of flushing to prepare the oil-based varnish for a printing ink include, for example, a method in which the oil-based varnish for a printing ink is obtained by following the same procedure as in the above-mentioned method except that the liquid alkyd resin and the binder resin oil-based varnish are separately added when performing flushing.

In addition, a proper amount (about 15% by mass or less with respect to the binder resin) of a gelling agent can be added to the binder resin oil-based varnish as required to crosslink the resin. In such a case, examples of the gelling agent to be used include aluminum alcoholates, aluminum chelate compounds and the like, and as preferable specific examples, aluminum triisopropoxide, mono-sec-butoxy aluminum diisopropoxide, aluminum sec-butoxide, ethyl acetoacetate aluminum diisopropoxide, aluminum tris-ethyl acetoacetate and the like can be exemplified.

As described above, by the method of producing an ink composition for offset printing of the present invention, it is possible to improve the productivity of inks considerably compared with the conventional method while using the acid carbon black, particularly the acid bead carbon black. Further, the ink composition for offset printing to be obtained has performance which is equivalent to that using the ink composition formed by milling by a conventional method even though the productivity of inks is improved, its acid carbon black has good dispersibility and age stability, and when the ink composition for offset printing of the present invention is used for sheet-fed printing, printing quality such as gloss and a degree of jet black, which is equal to or higher than that of the ink composition for offset printing using the ink composition formed by milling by a conventional method.

### BEST MODE FOR CARRYING OUT THE INVENTION

Hereinafter, the present invention will be described in more detail by way of Examples, but the present invention is not limited to these Examples. In addition, "%" and "part (s) " refer to "% by mass" and "part(s) by mass", unless otherwise specified. Further, in the following Examples, Comparative Examples and Reference Examples, a bulk density was measured according to JIS K 6219, and an acid value was measured according to JIS K 5601-2-1 as described above. Further, as described above, an average primary particle diameter is an arithmetic mean value of particle diameters determined by the observation of particles through an electron microscope.

### <Example 1>

224 parts of an acid bead carbon black (MA-7B, produced by Mitsubishi Chemical Corp.) having a pH of 3.0, a primary particle diameter of 24 nm and a bulk density of 0.40 g/cm³, and 360 parts of a wetting agent (running water) were mixed at 25°C for 30 minutes in a bench flusher (manufactured by Inoue Kikai Co., Ltd.) to wet the carbon black, and then 56 parts of a liquid soybean oil modified alkyd resin 1(acid value 9 KOH mg/g) having a basic skeleton consisting of isophthalic acid was added, and then 200 parts of a binder resin oil-based varnish 1 containing a rosin modified phenolic resin (a weight-average molecular weight 10000), a soybean oil, and AF Solvent No. 6 (trade name, a mineral oil component, a solvent for a printing ink, produced by Nippon Oil Corp.) in a mass ratio of 40: 25: 35 was added, and the resulting mixture was flushed at 50°C for 60 minutes (incidentally, herein, a substance formed by adding the liquid soybean oil modified alkyd resin 1 to the binder resin oil-based varnish 1 corresponds to an oil-based varnish 1 for a printing ink (refer to Table 1)). Then, a main body of the flusher was inclined, and the transuded wetting agent was removed, and the residual wetting agent was removed under a reduced pressure at 100°C for 60 minutes to reduce the content of the wetting agent to 2% or less. Thereafter, 320 parts of a binder resin oil-based varnish 2 containing a rosin modified phenolic resin (a weight-average molecular weight 80000), a soybean oil, AF Solvent No. 6, and ALCH (ethyl acetoacetate aluminum diisopropoxide) in a mass ratio of 40: 30: 29: 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 1 for offset printing. To 70 parts of this base ink 1 for offset printing, 12 parts of the binder resin oil-based varnish 2 and 8 parts of the AF Solvent No. 6 were added to obtain an ink composition 1 for offset printing.

### <Example 2>

360 parts of an acid bead carbon black having a pH of 3.0, a primary particle diameter of 24 nm and a bulk density of 0.40 g/cm³, and 224 parts of a wetting agent (running water) were mixed at 25°C for 30 minutes in a bench flusher (manufactured by Inoue Kikai Co., Ltd.) to wet the carbon black, and then 256 parts of an oil-based varnish 2 for a printing ink containing a rosin modified phenolic resin (a weight-average molecular weight 10000), a liquid soybean oil modified alkyd resin (acid value 9 KOH mg/g) having a basic skeleton consisting of isophthalic acid, a soybean oil, and AF Solvent No. 6 in a mass ratio of 31:22:20:27 was added, and the resulting mixture was flushed at 50°C for 60 minutes. Thereafter, a main body of the flusher was inclined, and the transuded wetting agent was removed, and further the remaining wetting agent was removed under a reduced pressure at 100°C for 60 minutes to reduce the content of the wetting agent to 2% or less. Thereafter, 320 parts of a binder resin oil-based varnish 2 described in Example 1 was added, and the resulting mixture was milled and dispersed until measurement of a particle diameter by a grind gauge became 5 µm or less with a roll mill (manufactured by Inoue Kikai Co., Ltd.) of 45°C to obtain a base ink 2 for offset printing. To 70 parts of this base ink 2 for offset printing, 12 parts of the binder resin oil-based varnish 2 and 8 parts of the AF Solvent No. 6 were added to obtain an ink composition 2 for offset printing.

### <Example 3>

A base ink 3 for offset printing was obtained by using the same materials and the same production conditions as in Example 1 except for changing the acid carbon black to be used from the acid bead carbon black described in Example 1 to an acid bead carbon black prepared by a pseudo-channel production process (Printex U, produced by Degussa AG.), having a pH of 3.0, a primary particle diameter of 25 nm and a bulk density of 0.45 g/cm³. To 70 parts of this base ink 3 for offset printing, 12 parts of the binder resin oil-based varnish 2 of Example 1 and 8 parts of the AF Solvent No. 6 of Example 1 were added to obtain an ink composition 3 for offset printing.

### <Example 4>

A base ink 4 for offset printing were obtained by using the same materials and the same production conditions as in Example 1 except for changing the amount of the wetting agent of Example 1 from 360 parts to 96 parts. To 70 parts of this base ink 4 for offset printing, 12 parts of the binder resin oil-based varnish 2 and 8 parts of the AF Solvent No. 6, described in Example 1, were added to obtain an ink composition 4 for offset printing.

### <Example 5>

A base ink 5 for offset printing were obtained by using the same materials and the same production conditions as in Example 1 except for changing the amount of the wetting agent of Example 1 from 360 parts to 523 parts. To 70 parts of this base ink 5 for offset printing, 12 parts of the binder resin oil-based varnish 2 and 8 parts of the AF Solvent No. 6, described in Example 1, were added to obtain an ink composition 5 for offset printing.

### <Example 6>

A base ink 6 for offset printing was obtained by using the same materials and the same production conditions as in Example 1 except for changing the amount of the wetting agent of Example 1 from 360 parts to 224 parts. To 70 parts of this base ink 6 for offset printing, 12 parts of the binder resin oil-based varnish 2 and 8 parts of the AF Solvent No. 6, described in Example 1, were added to obtain an ink composition 6 for offset printing.

### <Comparative Example 1>

224 parts of the acid bead carbon black described in Example 1 and 56 parts of the liquid soybean oil modified alkyd resin 1 having a basic skeleton consisting of isophthalic acid described in Example 1 were added, and then 200 parts of the binder resin oil-based varnish 1 described in Example 1 was added, and the resulting mixture was mixed at 50°C for 120 minutes in a bench flusher (manufactured by Inoue Kikai Co., Ltd.) (herein, a substance formed by adding the liquid soybean oil modified alkyd resin 1 to the binder resin oil-based varnish 1 corresponds to an oil-based varnish 1 for a printing ink (refer to Table 1)). Thereafter, to this, 320 parts of the binder resin oil-based varnish 2 of Example 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 7 for offset printing. To 70 parts of this base ink 7 for offset printing, 12 parts of the binder resin oil-based varnish 2 and 8 parts of the AF Solvent No. 6 were added to obtain an ink composition 7 for offset printing.

### <Comparative Example 2>

224 parts of the acid bead carbon black described in Example 1 and 256 parts of the oil-based varnish 2 for a printing ink described in Example 2 were mixed at 50°C for 120 minutes in a bench flusher (manufactured by Inoue Kikai Co., Ltd.). Thereafter, to this, 320 parts of the binder resin oil-based varnish 2 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 8 for offset printing. To 70 parts of this base ink 8 for offset printing, 12 parts of the binder resin oil-based varnish 2 and 8 parts of the AF Solvent No. 6 were added to obtain an ink composition 8 for offset printing.

### <Comparative Example 3>

A base ink 9 for offset printing was obtained by using the same materials and the same production conditions as in Comparative Example 1 except for changing the carbon black to be used from the acid bead carbon black described in Comparative Example 1 to the acid bead carbon black described in Example 3 having a pH of 3.0, a primary particle diameter of 25 nm and a bulk density of 0.45 g/cm³, prepared by a pseudo-channel production process. To 70 parts of this base ink 9 for offset printing, 12 parts of the binder resin oil-based varnish 2 and 8 parts of the AF Solvent No. 6 were added to obtain an ink composition 9 for offset printing.

### <Comparative Example 4>

A base ink 10 for offset printing was obtained by using the same materials and the same production conditions as in Example 1 except for changing the amount of the wetting agent of Example 1 from 360 parts to 40 parts. To 70 parts of this base ink 10 for offset printing, 12 parts of the binder resin oil-based varnish 2 of Example 1 and 8 parts of the AF Solvent No. 6 of Example 1 were added to obtain an ink composition 10 for offset printing.

### <Comparative Example 5>

224 parts of an acid powder carbon black (MA-7, produced by Mitsubishi Chemical Corp.) having a pH of 3.0 and a primary particle diameter of 24 nm and 56 parts of the liquid soybean oil modified alkyd resin 1 having a basic skeleton consisting of isophthalic acid described in Example 1 were added, and then 200 parts of the binder resin oil-based varnish 1 of Example 1 was added, and the resulting mixture was mixed at 50°C for 120 minutes in a bench flusher (manufactured by Inoue Kikai Co., Ltd.) (herein, a substance formed by adding the liquid soybean oil modified alkyd resin 1 to the binder resin oil-based varnish 1 corresponds to an oil-based varnish 1 for a printing ink (refer to Table 1)). Thereafter, to this, 320 parts of the binder resin oil-based varnish 2 of Example 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 11 for offset printing. To 70 parts of this base ink 11 for offset printing, 12 parts of the binder resin oil-based varnish 2 and 8 parts of the AF Solvent No. 6 were added to obtain an ink composition 11 for offset printing.

### <Example 7> (Acid Powder Carbon Black was Used)

224 parts of an acid powder carbon black (MA-7, produced by Mitsubishi Chemical Corp.) having a pH of 3.0, a primary particle diameter of 24 nm and a bulk density of 0.22 g/cm³, and 360 parts of a wetting agent (running water) were mixed at 25°C for 30 minutes in a bench flusher (manufactured by Inoue Kikai Co., Ltd.) to wet the carbon black, and 56 parts of the soybean oil modified alkyd resin 1(acid value 9 KOH mg/g) described in Example 1 was added, and then 200 parts of the binder resin oil-based varnish 1 described in Example 1 was added, and the resulting mixture was flushed at 50°C for 60 minutes (herein, a substance formed by adding the liquid soybean oil modified alkyd resin 1 to the binder resin oil-based varnish 1 corresponds to an oil-based varnish 1 for a printing ink (refer to Table 1)). Thereafter, a main body of the flusher was inclined, and the transuded wetting agent was removed, and further the remaining wetting agent was removed under a reduced pressure at 100°C over 60 minutes to a moisture content of 2% or less. Thereafter, 320 parts of the binder resin oil-based varnish 2 described in Example 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 12 for offset printing. To 70 parts of this base ink 12 for offset printing, 12 parts of the binder resin oil-based varnish 2 and 8 parts of the AF Solvent No. 6 were added to obtain an ink composition 12 for offset printing.

### <Example 8> (Industrial-Scale Example)

560 kg of an acid bead carbon black prepared by a pseudo-channel production process (Printex U, produced by Degussa AG.), having a pH of 3.0, a primary particle diameter of 25 nm and a bulk density of 0.45 g/cm³, and 900 kg of a wetting agent (running water) were mixed at 25°C for 30 minutes in a productive flusher (manufactured by Inoue Kikai Co., Ltd.) to wet the carbon black, and 140 kg of the liquid soybean oil modified alkyd resin 1 (acid value 9 KOH mg/g) described in Example 1 was added, and then 500 kg of the binder resin oil-based varnish 1 described in Example 1 was added, and the resulting mixture was flushed at 50°C for 60 minutes (herein, a substance formed by adding the liquid soybean oil modified alkyd resin 1 to the binder resin oil-based varnish 1 corresponds to an oil-based varnish 1 for a printing ink (refer to Table 1)). Thereafter, a main body of the flusher was inclined, and the transuded wetting agent was removed, and further the wetting agent was removed under a reduced pressure at 100°C over 90 minutes to a moisture content of 2% or less. Thereafter, 800 kg of the binder resin oil-based varnish 2 described in Example 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 13 for offset printing. To 700 kg of this base ink 13 for offset printing, 120 kg of the binder resin oil-based varnish 2 and 80 kg of the AF Solvent No. 6 were added to obtain an ink composition 13 for offset printing.

### <Comparative Example 6> (Industrial-Scale Comparative Example)

In a productive flusher (manufactured by Inoue Kikai Co., Ltd.), 560 kg of the acid bead carbon black similar to that in Comparative Example 3 and 140 kg of the soybean oil modified alkyd resin 1 described in Example 1 were added, and then 500 kg of the binder resin varnish 1 described in Example 1 was charged, and the resulting mixture was mixed at 50°C for 120 minutes (incidentally, herein, a substance formed by adding the liquid soybean oil modified alkyd resin 1 to the binder resin oil-based varnish 1 corresponds to an oil-based varnish 1 for a printing ink (refer to Table 1)). Thereafter, to this, 800 kg of the binder resin oil-based varnish 2 described in Example 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 14 for offset printing. To 700 kg of this base ink 14 for offset printing, 120 kg of the binder resin oil-based varnish 2 and 80 kg of the AF Solvent No. 6 were added to obtain an ink composition 14 for offset printing.

### <Comparative Example 7> (Industrial-Scale Comparative Example)

In a productive flusher (manufactured by Inoue Kikai Co., Ltd.), 560 kg of an acid powder carbon black similar to that in Comparative Example 5 and 140 kg of the soybean oil modified alkyd resin 2 (acid value 9 KOH mg/g) having a basic skeleton consisting of isophthalic acid described in Example 1 were added, and then 500 kg of the binder resin oil-based varnish 1 was put in a bench flusher (manufactured by Inoue Kikai Co., Ltd.), and the resulting mixture was mixed at 50°C for 120 minutes (herein, a substance formed by adding the liquid soybean oil modified alkyd resin 1 to the binder resin oil-based varnish 1 corresponds to an oil-based varnish 1 for a printing ink (refer to Table 1)). Thereafter, to this, 800 kg of the binder resin oil-based varnish 2 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 15 for offset printing. To 700 kg of this base ink 15 for offset printing, 120 kg of the binder resin oil-based varnish 2 and 80 kg of the AF Solvent No. 6 were added to obtain an ink composition 15 for offset printing.

### <Evaluation>

The dispersibility, the gloss and the degree of jet black of each ink composition for offset printing of Examples 1 to 8, and Comparative Examples 1 to 7 were evaluated according the following methods. The results of the evaluations are shown in Tables 6 and 7. In addition, the compositions of the oil-based varnishes for printing inks are shown in Table 1. Further, the compositions of the base inks 1 to 15 for offset printing described above are shown in Tables 2 and 3, and the compositions of the ink compositions 1 to 15 for offset printing described above are shown in Tables 4 and 5.

### (1) Dispersibility

A base ink was dispersed in such a way that a particle diameter measured by a grind gauge becomes 5 µm or less at a temperature of 45°C and at a constant closing pressure using a three-roll mill (manufactured by Inoue Kikai Co., Ltd.). Number of millings by the roll mill at the time when the particle diameter becomes 5 µm or less was taken as a measure of the dispersibility.

### (2) Evaluation of gloss and degree of jet black

Ink was developed on coated paper (O.K Topkote 73K) by a printing suitability tester PM-902PT (manufactured by SMT Co., Ltd.). A gloss value of this developed substance was measured with a gloss meter GM-26 (manufactured by Murakami Color Research Laboratory Co., Ltd.). In addition, as for the degree of jet black, L* was measured with a colorimetric spectrophotometer GretagMacbeth SpectroEye (manufactured by GretagMacbeth AG.). Smaller L* indicates that a blackish tone is stronger.

**Table 1**

| Compositions of oil-based varnishes for printing ink (*1) | | |
|---|---|---|
| Oil-based varnish for printing ink (*2) | 1 | 2 |
| Soybean oil modified alkyd resin 1 | 56 | 56 |
| Soybean oil modified alkyd resin 2 | - | - |
| Binder resin oil-based varnish 1 | 200 | 200 |
| Total | 256 | 256 |

| | | |
|---|---|---|
| *1 The measure of amount in Table refers to "parts by weight". *2 The oil-based varnish 1 for a printing ink is respectively substances formed by adding a soybean oil modified alkyd resin and a binder resin oil-based varnish separately in a flasher. The oil-based varnish 2 for a printing ink is a substance prepared before adding to a flasher. | | |

**Table 2**

| · Compositions of base inks for offset printing (*1) | | | | | | | | |
|---|---|---|---|---|---|---|---|---|
| | Example 1 | Example 2 | Example 3 | Example 4 | Example 5 | Example 6 | Example 7 | Example 8 |
| 24nm acid bead CB (*2) | 224 | 224 | - | 224 | 224 | 224 | - | - |
| 25nm pseudo-channel production process bead CB | - | - | 224 | - | - | - | - | 560 kg |
| 24nm acid powder CB | - | - | - | - | - | - | 224 | - |
| Water | 360 | 360 | 360 | 96 | 523 | 224 | 360 | 900 kg |
| Oil-based varnish 1 for printing ink | 256 | - | 256 | 256 | 256 | 256 | 256 | 640 kg |
| Oil-based varnish 2 for printing ink | - | 256 | - | - | - | - | - | - |
| Binder resin oil-based varnish 2 | 320 | 320 | 320 | 320 | 320 | 320 | 320 | 800kg |
| Tota!(*3) | 800 | 800 | 800 | 800 | 800 | 800 | 800 | 2000 kg |
| Base ink for offset printing | 1 | 2 | 3 | 4 | 5 | 6 | 12 | 13 |

| | | | | | | | | |
|---|---|---|---|---|---|---|---|---|
| *1 The measure of amount in Table refers to "parts" except for Example 8. *2 CB: carbon black *3 Total amount of base ink for offset printing obtained (the amount except for water) | | | | | | | | |

**Table 3**

| · Compositions of base inks for offset printing (*1) | | | | | | | |
|---|---|---|---|---|---|---|---|
| | Comparative Example 1 | Comparative Example 2 | Comparative Example 3 | Comparative Example 4 | Comparative Example 5 | Comparative Example 6 | Comparative Example 7 |
| 24nm acid bead CB (*2) | 224 | 224 | - | 224 | - | - | - |
| 25nm pseudo-channel production process bead CB | - | - | 224 | - | - | 560 kg | - |
| 24nm acid powder CB | - | - | - | - | 224 | - | 560 kg |
| Water | - | - | - | 40 | - | - | - |
| Oil-based varnish 1 for printing ink | 256 | - | 256 | 256 | 256 | 640 kg | 640kg |
| Oil-based varnish 2 for printing ink | - | 256 | - | - | - | - | - |
| Binder resin oil-based varnish 2 | 320 | 320 | 320 | 320 | 320 | 800 kg | 800 kg |
| Total(*3) | 800 | 800 | 800 | 800 | 800 | 2000 kg | 2000 kg |
| Base ink for offset printing | 7 | 8 | 9 | 10 | 11 | 14 | 15 |

| | | | | | | | |
|---|---|---|---|---|---|---|---|
| *1 The measure of amount in Table refers to "parts" except for Comparative Example 6 and 7. *2 CB: carbon black *3 Total amount of base ink for offset printing obtained (the amount except for water) | | | | | | | |

**Table 4**

| · Compositions of ink compositions for offset printing(*1) | | | | | | | | |
|---|---|---|---|---|---|---|---|---|
| Species of carbon black(*2) | Acid bead CB | | | | | | | |
| | Example | 1 Example 2 | Example 4 | Example 5 | Example | Comparative 6 Example 1 | Comparative Example 2 | Comparative Example 4 |
| Base ink 1 for offset printing | 70 - | | | | | - | - | - |
| Base ink 2 for offset printing | - | 70 | - | - | - | - | - | - |
| Base ink 3 for offset printing | - | - | - | - | - | - | - | - |
| Base ink 4 for offset printing | - | - | 70 | - | - | - | - | - |
| Base ink 5 for offset printing | - | - | - | 70 | - | - | - | - |
| Base ink 6 for offset printing | - | - | - | - | 70 | - | - | - |
| Base ink 7 for offset printing | - | - | - | - | - | 70 | - | - |
| Base ink 8 for offset printing | - | - | - | - | - | - | 70 | - |
| Base ink 9 for offset printing | - | - | - | - | - | - | - | - |
| Base ink 10 for offset printing | - | - | - | - | - | - | - | 70 |
| Base ink 11 for offset printing | - | - | - | - | - | - | - | - |
| Base ink 12 for offset printing | - | - | - | - | - | - | -- | - |
| Base ink 13 for offset printing | - | - | - | - | - | - | - | - |
| Base ink 14 for offset printing | - | - | - | - | - | - | - | - |
| Base ink 15 far offset printing | | | | | | | | |
| Binder resin oil-based varnish 2 | 12 | 12 | 12 | 12 | 12 | 12 | 12 | 12 |
| AF Solvent No.6 | 8 | 8 | 8 | 8 | 8 | 8 | 8 | 8 |
| Total | 90 | 90 | 90 | 90 | 90 | 90 | 90 | 90 |
| Ink composition for offset printing | 1 | 2 | 4 | 5 | 6 | 7 | 8 | 10 |

| | | | | | | | | |
|---|---|---|---|---|---|---|---|---|
| *1 The measure of amount in Table refers to "parts". *2 CB: carbon black | | | | | | | | |

**Table 5**

| · Compositions of ink compositions for offset printing(*1) | | | | | | | |
|---|---|---|---|---|---|---|---|
| Species of carbon black(*2) | Pseudo-channel production process bead CB | | Acid powder CB | | (Production on Industrial-Scale) | | |
| | | | | | Pseudo-channel production process bead CB | | Acid powder CB |
| | Example 3 | Comparative Example 3 | Example 7 | Comparative Example 5 | Example 8 | Comparative Example 6 | Comparative Example 7 |
| Base ink 1 for offset printing | - | - | - | - | - | - | - |
| Base ink 2 for offset printing | - | - | - | - | - | - | - |
| Base ink 3 for offset printing | 70 | - | - | - | - | - | - |
| Base ink 4 for offset printing | - | - | - | - | - | - | - |
| Base ink 5 for offset printing | - | - | - | - | - | - | - |
| Base ink 6 for offset printing | - | - | - | - | - | - | - |
| Base ink 7 for offset printing | - | - | - | - | - | - | - |
| Base ink 8 for offset printing | - | - | - | - | - | - | - |
| Base ink 9 for offset printing | - | 70 | - | - | - | - | - |
| Base ink 10 for offset printing | - | - | - | - | - | - | - |
| Base ink 11 for offset printing | - | - | - | 70 | - | - | - |
| Base ink 12 far offset printing | - | - | 70 | - | | - | - |
| Base ink 13 for offset printing | - | - | - | - | 700kg | - | - |
| Base ink 14 for offset printing | - | - | - | - | - | 700kg | - |
| Base ink 15 for offset printing | - | - | - | - | - | - | 700kg |
| Binder resin oil-based varnish 2 | 12 | 12 | 12 | 12 | 120kg | 120kg | 120kg |
| AF Solvent No.6 | 8 | 8 | 8 | 8 | 80kg | 80kg | 80kg |
| Total | 90 | 90 | 90 | 90 | 900kg | 900kg | 900kg |
| Ink composition for offset printing | 3 | 9 | 12 | 11 | 13 | 14 | 15 |

| | | | | | | | |
|---|---|---|---|---|---|---|---|
| *1 The measure of amount in Table refers to "parts" except for Example 8, Comparative Example 6 and 7. *2 CB: carbon black | | | | | | | |

**Table 6**

| · Evaluation of ink compositions for offset printing | | | | | | | | |
|---|---|---|---|---|---|---|---|---|
| Species of carbon black(*1) | Acid bead CB | | | | | | | |
| | Example 1 | Example 2 | Example 4 | Example 5 | Example 6 | Comparative Example 1 | Comparative Example 2 | Comparative Example 4 |
| Ink compositions for offset printing | 1 | 2 | 4 | 5 | 6 | 7 | 8 | 10 |

| <Evaluation> | | | | | | | | |
|---|---|---|---|---|---|---|---|---|
| Number of passes of three-roll mill | 1 time | 1time | 1 time | 1 time | 1 time | 2 times | 2 times | 2 times |
| Gross | 60.2 | 60.0 | 60.0 | 59.9 | 60.2 | 56.6 | 56.4 | 56.8 |
| Degree of jet-black(L*) | 15.8 | 15.8 | 16.3 | 16.5 | 15.8 | 18.0 | 18.2 | 17.9 |

| <Production time> | | | | | | | | |
|---|---|---|---|---|---|---|---|---|
| Wetting time | 30 min | 30 min | 30 min | 30 min | 30 min | - | - | 30 min |
| Flushing time | 60 min | 60 min | 60 min | 60 min | 60 min | - | - | 60 min |
| Time for removing water | 60 min | 60 min | 60 min | 60 min | 60 min | - | - | 60 min |
| Time for mixing and kneading | - | - | - | - | - | 120 min | 120 min | - |
| Time for milling with three-roll mill | 45 min | 45 min | 45 min | 45 min | 45 min | 90 min | 90 min | 90 min |
| Total time | 195 min | 195 min | 195 min | 195 min | 195 min | 210 min | 210 min | 240 min |

| | | | | | | | | |
|---|---|---|---|---|---|---|---|---|
| *1 CB: carbon black | | | | | | | | |

**Table 7**

| · Evaluation of ink compositions for offset printing | | | | | | | |
|---|---|---|---|---|---|---|---|
| Species of carbon black(*1) | Pseudo-channel production process bead CB | | Acid powder CB | | (Production on Industrial-Scale) | | |
| | | | | | Pseudo-channel production process bead CB | | Acid powder CB |
| | Example 3 | Comparative Example 3 | Example 7 | Comparative Example 5 | Example 8 | Comparative Example 6 | Comparative Example 7 |
| Ink compositions for offset printing | 3 | 9 | 12 | 11 | 13 | 14 | 15 |

| <Evaluation> | | | | | | | |
|---|---|---|---|---|---|---|---|
| Number of passes of three-roll mill | 1 time | 3 times | 1 time | 2 times | 1 time | 2 times | 2 times |
| Gross | 60.1 | 54.0 | 60.4 | 57.5 | 61.0 | 57.0 | 57.3 |
| Degree of jet-black(L*) | 16.2 | 18.3 | 15.7 | 17.2 | 15.3 | 17.8 | 17.2 |

| < Production time> | | | | | | | |
|---|---|---|---|---|---|---|---|
| Wetting time | 30 min | - | 30 min | - | 30 min | - | - |
| Flushing time | 60 min | - | 60 min | - | 60 min | - | - |
| Time for removing water | 60 min | - | 60 min | - | 90 min | - | - |
| Time for mixing and kneading | - | 120 min | - | 120 min | - | 120 min | 120 min |
| Time for milling with three-roll mill | 45 min | 135 min | 45 min | 90 min | 480 min | 870 min | 780 min |
| Total time | 195 min | 255 min | 195 min | 210 min | 660 min | 990 min | 900 min |

| | | | | | | | |
|---|---|---|---|---|---|---|---|
| *1 CB: carbon black | | | | | | | |

As shown in Tables 6 and 7, the total production times of the ink compositions 1 to 6, and 12 for offset printing of the present invention, obtained in Examples 1 to 7, can be shortened compared with those of the ink compositions 7 to 11 for offset printing obtained in Comparative Examples. In addition, the total production time of the ink composition 13 for offset printing of the present invention, obtained in Example 8 on an industrial scale, can be shortened compared with that of the ink composition 14 (the acid bead carbon black was used as an acid carbon) and the ink composition 15 (the acid powder carbon black was used as an acid carbon black) for offset printing obtained in Comparative Examples on an industrial scale. Further, it can be understood that the ink compositions 1 to 6, 12 and 13 for offset printing of the present invention are superior in the dispersibility, the gloss and the degree of jet-black since the ink compositions for offset printing of the present invention have high gloss values and small values of L*.

### INDUSTRIAL APPLICABILITY

The production method of the present invention can provide an ink composition for offset printing, which can improve the productivity of inks considerably compared with the conventional production method, and has good dispersibility and excellent printing quality even when the acid carbon black, particularly the acid bead carbon black is used. The ink composition for offset printing prepared by the production method of the present invention can be used in sheet-fed printing, offset rotary printing (heatset type, non-heatset type), newspaper printing and the like. Among others, when it is used in sheet-fed printing, printing quality such as a degree of jet black and gloss becomes good and it is suitable for the sheet-fed printing.

## Claims

1. A method of producing an ink composition for offset printing, comprising the steps of
wetting 100 parts by mass of an acid carbon black having a pH value of 2.0 to 6.0 with 25 to 400 parts by mass of a wetting agent containing at least water,
using an oil-based varnish for a printing ink containing an alkyd resin having an acid value of 30 KOH mg/g or less to perform flushing of said wetted acid bead carbon black, and then
removing the wetting agent.

2. The method of producing an ink composition for offset printing according to claim 1, further comprising the step of
milling with a roll mill or a bead mill after completion of said steps of wetting, performing flushing and then removing the wetting agent.

3. The method of producing an ink composition for offset printing according to claim 1 or 2,
wherein an acid carbon black having a bulk density of 0.1 to 0.8 g/cm³ and an average primary particle diameter of 15 to 70 nm is used as said acid carbon black.

4. The method of producing an ink composition for offset printing according to any one of claims 1 to 3,
wherein said acid carbon black is an acid bead carbon black having a bulk density of 0.2 to 0.8 g/cm³ and an average primary particle diameter of 15 to 70 nm.

5. The method of producing an ink composition for offset printing according to any one of claims 1 to 4,
wherein a vegetable oil modified alkyd resin is used as said alkyd resin.

6. The method of producing an ink composition for offset printing according to any one of claims 1 to 5,
wherein the content of said alkyd resin is 1 to 60% by mass with respect to said acid carbon black.

7. An ink composition for offset printing prepared by the method of producing an ink composition for offset printing according to any one of claims 1 to 6.

8. The ink composition for offset printing according to claim 7,
wherein the ink composition for offset printing is an ink composition for sheet-fed offset printing.
